Europäisches Patentamt

European Patent Office

Office européen des brevets

(11) Veröffentlichungsnummer: **0 108 852**
**A1**

(12) **EUROPÄISCHE PATENTANMELDUNG**

(21) Anmeldenummer: **82810481.0**

(22) Anmeldetag: **10.11.82**

(51) Int. Cl.³: **G 01 P 5/00, G 10 K 11/32**

(43) Veröffentlichungstag der Anmeldung: **23.05.84**
**Patentblatt 84/21**

(84) Benannte Vertragsstaaten: **AT BE CH DE FR GB IT LI LU NL SE**

(71) Anmelder: **Franz Rittmeyer AG, Postfach, CH-6300 Zug 2 (CH)**

(72) Erfinder: **Baur, Walter, Albisstrasse 42, CH-6312 Steinhausen (CH)**
Erfinder: **Ramm, Jürgen, Dr. Dipl.-Phys., Unterhusweg 3, CH-6010 Kriens (CH)**

(74) Vertreter: **White, William et al, PATENTANWALTS-BUREAU ISLER AG Postfach 6940 Walchestrasse 23, CH-8023 Zürich (CH)**

(54) **Verfahren zur Messung der Strömungsgeschwindigkeit von Fluiden und Sende-Empfangskopf zur Durchführung des Verfahrens.**

(57) Zur Verhinderung von Reflexionen zwischen dem Sender und dem Empfänger in Messanlagen zur Geschwindigkeitsmessung von Fluiden mittels Ultraschallwellen, wird die Abstrahlungsfläche (13) des Sende-Empfangskopfes (10) kegelförmig ausgebildet. Der Öffnungswinkel des Kegels ist bei 176–179°. Durch die damit bewirkte keulenförmige Ausbreitung der Wellen werden Reflexionen vermieden, die sich in der Empfangs- und Auswerteeinrichtung nicht von den Primärwellen unterscheiden lassen. Die Kegelform ist sehr einfach herzustellen.

EP 0 108 852 A1

0108852

Franz Rittmeyer AG
CH-6300  Z u g

Verfahren zur Messung der Strömungsgeschwindigkeit von
Fluiden und Sende-Empfangskopf zur Durchführung des Verfahrens

Die vorliegende Erfindung betrifft ein Verfahren zur Messung
der Strömungsgeschwindigkeit von Fluiden gemäss dem Oberbegriff
des unabhängigen Patentanspruchs 1, sowie einen Sende-Empfangskopf gemäss dem Oberbegriff des Patentanspruchs 3.

Zur Messung von Strömungsgeschwindigkeiten ist es allgemein bekannt, Schallwellen, insbesondere mit Frequenzen oberhalb des
Hörspektrums zu benützen. Diese Ultraschallwellen werden unter
einem spitzen Winkel zur Flussrichtung abwechselnd in Strömungsrichtung und entgegen der Strömungsrichtung ausgesendet.

Dabei wird der Sender impulsartig erregt, so dass ein Ultraschall-
Impuls abgestrahlt wird. In einem Empfänger wird das ankommende
Signal empfangen und einer Signalauswertung unterworfen. Hier
wird beispielsweise die Laufzeit zwischen dem Abstrahlen des
Sendeimpulses und dem Empfangen dieses Impulses bestimmt. Wenn
in einem strömenden Medium sowohl die Laufzeit in Strömungsrichtung als auch die Laufzeit entgegen der Strömungsrichtung gemessen wird, kann die Strömungsgeschwindigkeit bestimmt werden.

Sende-Empfangsköpfe sind ebenfalls bekannt. Eine beispielsweise Ausführungsform ist in der CH-A 611 020 dargestellt und beschrieben. Ein solcher Wandler umfasst demnach ein aktives Element, z.B. einen piezokeramischen Schwinger, das durch einen Spannungsstoss angeregt, eine mechanische Resonanzschwingung erzeugt. Das aktive Element, das zwischen Isolatoren eingebettet sein kann, ist durch ein akustisches Fenster von der vorbeiströmenden Flüssigkeit getrennt. Das ganze Gebilde ist in einen hülsenartigen Körper eingebaut, der in einen Vorsprung in der Rohrwand, beispielsweise in einen Einschweissstutzen, eingesetzt ist

Die akustischen Fenster der beiden zusammengehörenden Sende-Empfangsköpfe liegen einander gegenüber, so, dass ein vom Senderkopf erzeugtes akustisches Signal direkt zum Schwinger im Empfangskopf gelangt. Wie bekannt, entstehen an den Grenzflächen von zwei unterschiedlichen Medien, wie hier zwischen dem Fluid und dem akustischen Fenster Reflexionen und es hat sich gezeigt, dass eine primäre Welle elektronisch nur schwer von einer zweifach reflektierten Welle unterschieden werden kann.

Es ist deshalb eine Aufgabe der Erfindung das Problem der Reflexion zu lösen, damit die Auswerteeinheit nur das Signal der

- 3 -

0108852

primären Welle zu verarbeiten hat.

Erfindungsgemäss wird dies mit einem Verfahren gemäss den Merkmalen des kennzeichnenden Teils des unabhängigen Patentanspruchs 1 erreicht. Ein Sende-Empfangskopf zur Durchführung des Verfahrens ist im Patentanspruch 3 gekennzeichnet.

In den abhängigen Ansprüchen sind besondere Ausführungsformen gekennzeichnet.

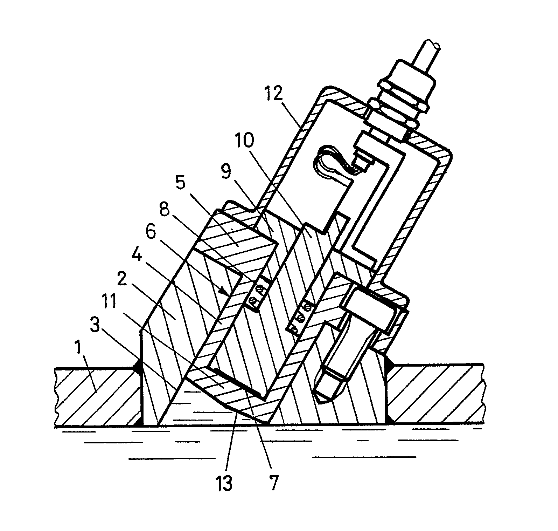

Ein Ausführungsbeispiel eines Sende- Empfangskopfes zur Durchführung des Verfahrens wird nachfolgend an Hand der Zeichnung erläutert. In der einzigen Figur ist eine Schnittansicht eines in ein Rohr eingebauten Sende-Empfangskopfes dargestellt.

In der Wand eines Rohres 1 ist ein Stutzen 2 eingeschweisst. Dieser Stutzen 2 ist mit einer zylindrischen Bohrung 3 für einen Schaft 4 eines Einsatzes 6 mit einem Flansch 5 versehen. Der Sende-Empfangskopf 10 ist in diesen Einsatz 6 eingebaut und weist als wichtigstes Element den piezokeramischen Schwinger 7 auf. Mit einer Feder 8 und einem Halteflansch 9 wird der Sende-Empfangskopf 10 gegen die Abschlusspartie 11 des Einsatzes 6 gepresst. In einer Haube 12 sind die elektrischen Verbindungselemente untergebracht.

Erfindungsgemäss ist nun die Aussenfläche 13 der Abschlusspartie 11 kegelförmig ausgebildet. Der Oeffnungswinkel des Kegels beträgt beispielsweise 176-179°. Er kann aber auch um einige wenige Grad kleiner sein. Damit wird infolge des rechtwinkligen Austretens der Wellen aus der Aussenfläche 13 eine keulenförmige Verbreiterung des Strahles bewirkt, und an der Aussenfläche des Empfangskopfes, die ebenso ausgebildet ist, können keine Anteile mehr zum Sender zurück reflektiert werden. Dadurch kann das Problem der fast gleichzeitig mit dem Nutzsignal der Auswerteeinheit zufliessenden Störsignale infolge der Reflexion an den Aussenflächen der Abschlusspartien gelöst werden.

Anstelle einer Kegelfläche wäre auch eine Kugelkalotte denkbar, nur benötigt eine solche einen grösseren Aufwand bei der Herstellung. Anstelle von konvexen Flächen könnten auch konkave Flächen verwendet werden, nur müsste dann der Brennpunkt dieser Flächen so vorgesehen sein, dass die reflektierten Strahlen nicht zum Empfänger zurückkehren können. Wogegen eine Kegelfläche sehr einfach in der Herstellung und unabhängig vom Rohr-durchmesser verwendbar ist.

0108852

Franz Rittmeyer AG
6300  Z u g

P a t e n t a n s p r ü c h e

1.      Verfahren zur Messung der Strömungsgeschwindigkeit von Fluiden mittels Ultraschallwellen, die
in einem bestimmten räumlichen Bereich der Rohrleitung von einem
Sender zu einem diesem gegenüberliegend angeordneten Empfänger
übertragen werden, dadurch gekennzeichnet, dass die Ultraschallwellen vom Sender räumlich verteilt abgestrahlt werden.

2.      Verfahren nach Patentanspruch 1, dadurch gekennzeichnet, dass die Abstrahlung in divergierender Weise erfolgt.

3.      Sende-Empfangskopf zur Durchführung des Verfahrens nach Patentanspruch 1, dadurch gekennzeichnet, dass die
die Grenzfläche zum Fluid bildende Stirnfläche konvex ausgebildet
ist.

4.         Sende-Empfangskopf nach Patentanspruch 3, dadurch gekennzeichnet, dass die Stirnfläche als Kegelmantel geformt ist.

5.         Sende-Empfangskopf nach Patentanspruch 4, dadurch gekennzeichnet, dass der Oeffnungswinkel des Kegels grösser als 170° ist.

6.         Sende-Empfangskopf nach Patentanspruch 5, dadurch gekennzeichnet, dass der Oeffnungswinkel zwischen 178° und 179° liegt.

0108852

Europäisches
Patentamt

EUROPÄISCHER RECHERCHENBERICHT

0 108852

Nummer der Anmeldung

EP  82 81 0481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-2 023 825  (DRÄGERWERK AG.) <br> * Seite 2, Zeilen 30-60; Figur 2 * <br><br> --- | 1-3 | G 01 P    5/00 <br> G 10 K   11/32 |
| X | GB-A-1 303 518  (SONICAID LTD.) <br> * Seite 1, Zeilen 45-49; Seite 1, Zeile 82 - Seite 2, Zeile 2; Figur 2 * <br><br> --- | 1-3 | |
| X | US-A-3 861 211  (DEWAN) <br> * Spalte 2, Zeilen 23-26; Figur 1 * <br><br> --- | 1-3,5 | |
| X | US-A-4 162 630  (JOHNSON) <br> * Spalte 3, Zeile 55 - Spalte 4, Zeile 5; Figuren 2A, 2B * <br><br> --- | 1-3 | |
| A | DE-A-2 633 003  (WESTINGHOUSE) <br> * Seite 7, Zeile 3 - Seite 8, Zeile 9; Figuren 2,3 * <br><br> ----- | 1 | **RECHERCHIERTE SACHGEBIETE (Int. Cl. ³)** <br><br> G 01 P <br> G 01 F <br> G 10 K |

Der vorliegende Recherchenbericht wurde für alle Patentansprüche erstellt.

| Recherchenort <br> DEN HAAG | Abschlußdatum der Recherche <br> 11-07-1983 | Prüfer <br> HANSEN P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82